# EUROPÄISCHE PATENTANMELDUNG

(11) **EP 3 382 861 A1**
(43) Veröffentlichungstag der Anmeldung: **03.10.2018**
(21) Anmeldenummer: 17163840.6
(22) Anmeldetag: 30.03.2017
(51) Int. Cl.: H02K 7/18, H02K 16/00, B60L 11/00, H02K 7/00, H02K 5/16

(54) **FAHRZEUG MIT DIESELELEKTRISCHER ENERGIEERZEUGUNG**

(71) Anmelder: Siemens Aktiengesellschaft, 80333 München (DE)
(72) Erfinder: Körner, Olaf, 90469 Nürnberg (DE)

(57) **Zusammenfassung**

Die Erfindung betrifft ein Fahrzeug mit dieselelektrischer Energieerzeugung mittels eines Dieselaggregats (18) für zumindest einen elektrischen Fahrmotor und zumindest einen Hilfsbetrieb (21), wobei die dieselelektrische Energieerzeugung des Fahrmotors über einen Hauptgenerator (1) erfolgt und die elektrische Energieerzeugung des Hilfsbetriebs (21) über einen Hilfsbetriebegenerator (13) erfolgt, wobei Hauptgenerator (1) und Hilfsbetriebegenerator (13) galvanisch voneinander getrennt und mechanisch gekoppelt sind und wobei der Hilfsbetriebegenerator (13) zwischen dem Dieselaggregat (18) und dem Hauptgenerator (1) angeordnet ist.

## Beschreibung

Die Erfindung betrifft ein Fahrzeug mit einer dieselelektrischen Energieerzeugung für zumindest einen Fahrmotor und zumindest einen Hilfsbetrieb des Fahrzeugs.

Fahrzeuge mit dieselelektrischer Energieerzeugung weisen einen Generator zur Energieerzeugung auf, der einen Zwischenkreis eines Umrichters versorgt, wobei über den Zwischenkreis über dreiphasige Hilfsbetriebeumrichter, Transformatoren zur Potentialtrennung elektrische Energie für die Hilfsbetriebe bereitgestellt wird.

So ist aus der Zeitschrift "Eisenbahnkurier" EK-Verlag 2007 beim Euro-Runner ein Hilfsbetriebeumrichter bekannt, der aus dem Traktionszwischenkreis mitversorgt wird, wobei durch Tiefsetzsteller eine geeignete Eingangsspannung bereitgestellt wird.

Des Weiteren sind zusätzliche Hilfsbetriebewicklungen im Generator in den gleichen Nuten des Stators bekannt.

Nachteilig dabei ist, dass zum einen die abgezweigte Energie dem Traktionsmotor nicht mehr zur Verfügung steht und die elektrische Auslegung des Generators erschwert wird.

Ausgehend davon liegt der Erfindung die Aufgabe zugrunde, ein Fahrzeug mit dieselelektrischer Energieerzeugung zu schaffen, bei dem in einfacher Art und Weise die Hilfsbetriebe elektrisch versorgt werden.

Die Lösung der gestellten Aufgabe gelingt dadurch, dass die dieselelektrische Energieerzeugung des Fahrmotors über einen Hauptgenerator erfolgt und die elektrische Energieerzeugung des Hilfsbetriebs über einen Hilfsbetriebegenerator erfolgt, wobei Hauptgenerator und Hilfsbetriebegenerator galvanisch voneinander getrennt und mechanisch gekoppelt sind und wobei der Hilfsbetriebegenerator zwischen dem Dieselaggregat und dem Hauptgenerator angeordnet ist.

Durch die erfindungsgemäße Integration eines separaten Hilfsbetriebegenerators in den Traktionsgenerator auf der A-Seite, also auf der dem Verbrennungsmotors zugewandten Seite wird vorzugsweise eine einfache, effiziente Anordnung geschaffen, die kompakt ausgeführt ist. Dabei sind insbesondere die Wicklungen der Statoren von Hauptgenerator und Hilfbetriebegenerator räumlich und galvanisch voneinander getrennt. Damit sind Austausch und Wartungsarbeiten an den Generatoren in einfacher Art und Weise möglich.

Des Weiteren ist es möglich für Fahrzeuge mit unterschiedlichen Hauptgeneratoren die gleichen Hilfsbetriebegeneratoren vorzusehen. Ebenso können unterschiedliche Hilfsbetriebegeneratoren bei gleichen Hauptgeneratoren vorgesehen sein. Die Erfindung bildet somit ein modulares Konzept für verschiedene, insbesondere elektrische Anforderungen

Vorzugsweise wird ein höherpoliger durchzugsbelüfteter Permanent-Hilfsbetriebegenerator mit Zahnspulenwicklung eingesetzt. Durch die Zahnspulenwicklung ist der Aufbau des Stators des Hilfsbetriebegenerators vergleichsweise einfach.

Der Rotor, dessen Aktivteil vorzugsweise Permanentmagnete aufweist, ist entweder direkt auf der Welle oder in einem geblechten Rotorjoch angeordnet, das auf die Welle aufgebracht ist. Die Permanentmagnete können entweder direkt auf eine Welle beispielsweise in einer Halbachanordnung und/oder über eine Manschette als Rotorjoch an dieser Welle befestigt werden. Die Manschette weist dann ein Blechpaket auf, das an der Oberfläche Permanentmagnete aufweist oder im Blechpaket vergrabene Permanentmagnete aufweist.

Um einen kompakten Aufbau zu erreichen, wird der Hilfsbetriebegenerator axial zwischen Verbrennungsaggregat und Hauptgenerator, vorzugsweise koaxial angeordnet. Somit befindet er sich, um die Kompaktheit zu erreichen, radial innerhalb der Wickelköpfe eines Wicklungssystems des Stators des Hauptgenerators.

Der Hilfsbetriebegenerator weist somit einen Stator und einen Rotor auf. Der Stator ist über eine geeignete Halterung, z.B. einen Speichenring zur Aufnahme dieses Stators in einem Lagerschild und/oder im Gehäuse des Hauptgenerators gehalten. Diese Halterung kann Abluftauslässe zwischen den Speichen zur Kühlung des Hilfsbetriebegenerators aufweisen. Die Halterung ist vorzugsweise ein Gussteil, das einfach herzustellen ist. Um eine zusätzliche Kühlung des Hilfsbetriebegenerators zu erreichen, sind sowohl am Gehäuse des Stators des Hilfsbetriebegenerators und/oder an der Halterung Rippen vorgesehen um eine Oberflächenvergrößerung zu erhalten, die den Kühleffekt verbessert.

Durch die erfindungsgemäße Ausgestaltung der elektrischen Energieerzeugung des Fahrzeugs ist somit nunmehr keine aufwändige Zusatzwicklung für Hilfsbetriebeleistung in den Nuten des Hauptgenerators notwendig. Es sind somit keine Kompromisse bei der Auslegung des Hauptgenerators, wie beim Stand der Technik erforderlich, der aufgrund der Zusatzwicklung nur eine verringert mögliche Traktionsleistung dem Fahrmotor oder den Fahrmotoren bereitstellen kann.

Die erfindungsgemäße Ausgestaltung der elektrischen Energieerzeugung von Traktionsleistung und Hilfsbetriebeleistung kann nunmehr gegenüber dem Stand der Technik die zusätzlich verfügbare Leistung (ca. 5% der Traktionsleistung) ausschließlich für die Traktionsleistung des oder Fahrmotoren zur Verfügung gestellt werden.

Durch die Anordnung des Hilfsgetriebegenerators zwischen Hauptgenerator und Verbrennungsaggregat kann nunmehr vorteilhafterweise der Hilfsbetriebegenerator Lagerung, Welle und Kühlung des Hauptgenerators nutzen. Es sind somit keine zusätzlich aufwändig gestalteten Konstruktionen erforderlich.

Vorteilhafterweise kann bei dieser erfindungsgemäßen Anordnung der Hilfsbetriebegenerator auch als Dieselmotorstarter genutzt werden.

Der Hilfsbetriebegenerator kann durch den erfindungsgemäßen Aufbau bei Hauptgeneratoren, die als Asynchrongeneratoren, permanenterregte Generatoren oder elektrisch erregte Generatoren ausgeführt sind, eingesetzt werden.

Die Erfindung sowie vorteilhafte Ausgestaltungen der Erfindung sind den Ausführungsbeispielen zu entnehmen. Darin zeigen:
- FIG 1: einen Längsschnitt eines Hauptgenerators mit Hilfsbetriebegenerator,
- FIG 2: einen Hilfsbetriebegenerator,
- FIG 3: ein elektrisches Prinzipschaltbild.

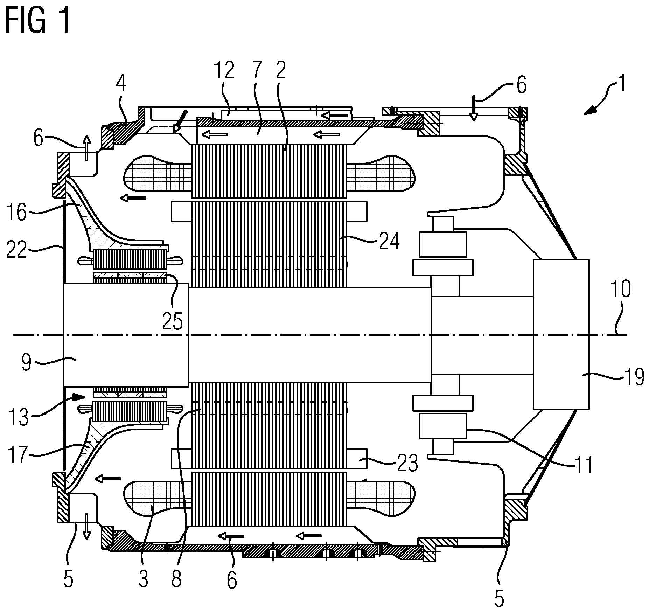

FIG 1 zeigt in prinzipieller Darstellung einen Längsschnitt eines Hauptgenerators 1 und eines Hilfsbetriebegenerators 13. Sowohl der Hilfsgetriebegenerator 13 als auch der Hauptgenerator 1 sind auf einer Welle 9 axial hintereinander angeordnet. D.h. es liegt eine direkte mechanische Kopplung zwischen den Rotoren 24, 25 von Hauptgenerator 1 und Hilfsgenerator 13 vor.

Der Hilfsbetriebegenerator 13 ist vorzugsweise als höherpolige (>8 Pole) permanenterregte Synchronmaschine ausgelegt.

Die Rotoren 24, 25 von Hauptgenerator 1 und Hilfsbetriebegenerator 13 drehen sich um eine gemeinsame Achse 10.

Der Hauptgenerator 1 weist einen Stator 2 auf, der axiale Kühlkanäle 7 im Blechpaket oder am Blechpaket des Stators 2 aufweist. In nicht näher dargestellten Nuten des Stators 2 ist ein Wicklungssystem vorgesehen, das an den Stirnseiten des Stators 2 jeweils einen Wickelkopf 3 ausbildet. Als Wicklungssystem dieses Stators 2 können alle möglichen Arten von Wicklungssystemen realisiert sein, u.a. Schleifenwicklungen, Zahnspulenwicklungen als auch geschichtete und gesehnte Wicklungen.

Der Rotor 24 des Hauptgenerators 1 kann ein Asynchronkäfigläufer, ein elektrisch erregter Rotor 24 oder ein permanenterregter Rotor 24 sein.

Axial vom Hilfsbetriebegenerator 13 beabstandet, auf der anderen Seite des Hauptgenerators 1 - also der B-Seite - befindet sich in dieser Ausführung eine Erregermaschine 11 mit rotierenden Dioden-Gleichrichter, die eine elektrisch Erregung dem Rotor 24 bereitstellt. Des Weiteren sind auf dieser Seite des Hauptgenerators 1 die B-seitige Lagerung und/oder Geberanordnungen 19 etc. vorgesehen. Der Hauptgenerator 1 und dessen Gehäuse 4 weisen Luftausnehmungen 5 auf, die eine Luft-Luftkühlung bzw. eine durchzugsbelüftete Anordnung von Haupt- und Hilfsbetriebegenerator 13 gestatten.

Demnach sind im Rotor 24 axial verlaufene Kühlkanäle 8 vorgesehen, die eine Kühlung des Rotors 24 unabhängig von seiner elektrischen Auslegung gestatten. Vorteilhafterweise ist der Hilfsbetriebegenerator 13 in axialer Verlängerung eines Kühlluftstroms, in diesem Fall den axialen Kühlkanälen 8 des Rotors 24 angeordnet, so dass eine Kühlung des Stators und/oder des Rotors 25 des Hilfsbetriebegenerators 13 eintritt.

Die Kühlung von Haupt- und Hilfsbetriebegenerator erfolgt durch Fremd- und/oder Eigenbelüftung.

Die Welle 9 ist beispielsweise über eine Membrankupplung 22 mit dem Dieselaggregat 18 mechanisch verbunden. Der Hilfsbetriebegenerator 13 ist somit zwischen Dieselaggregat 18 und Hauptgenerator 1 angeordnet.

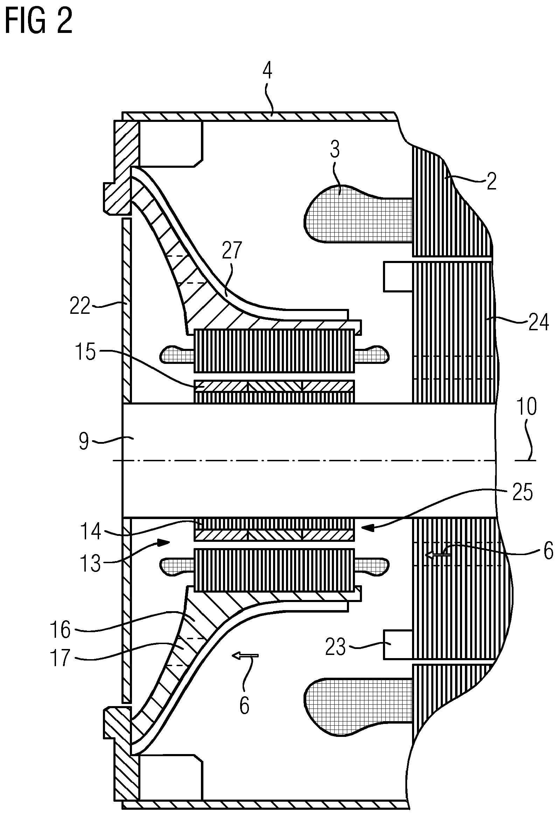

Der Hilfsbetriebegenerator 13 wird, wie in FIG 2 näher dargestellt, durch eine Halterung 16 am Gehäuse 4 des Hauptgenerators 1 oder einem Lagerschild fixiert. Diese Halterung 16, die auch als Stützkonstruktion bezeichnet werden kann, weist beispielsweise Speichen mit einem Ring zur Aufnahme des Stators 26 auf. Die Halterung 16 wird dabei insbesondere von einem Luftauslassring an der Stirnseite des Hauptgenerators 1 aufgenommen. Die Halterung 16 kann aber auch als Bestandteil des Luftauslassringes ausgeführt sein, z.B. in Form eines Gussteils.

Alternativ dazu kann die Halterung 16 auch direkt am Gehäuse 4 des Hauptgenerators 1 angebracht sein.

Eine speichenförmige Struktur der Halterung 16 trägt zur Entwärmung des Hilfsbetriebegenerators 13 bei, insbesondere wenn dieser im Kühlluftstrom des Hauptgenerators 1 liegt.

Der Rotor 25 wird im Betrieb des Hauptgenerators 1 und des Hilfsbetriebegenerators 13 auch durch die Welle 9 entwärmt.

Der Stator 26 des Hilfsbetriebegenerators 13 weist ebenfalls Zahnspulen auf, wobei der Rotor 25 des Hilfsbetriebegenerators 13, in diesem Fall außenliegende Permanentmagnete 15 aufweist, die durch eine vergleichsweise geringe axiale Blechschichtung von der Welle beabstandet sind. Die Permanentmagnete 15 sind dabei am Außenumfang durch eine Bandage gehalten.

Der Hilfsbetriebegenerator 13 ist zumindest zum überwiegenden Teil radial innerhalb der Wickelköpfe 3 des Stators 2 des Hauptgenerators 1 angeordnet, um einen kompakten Aufbau der gesamten Systems von Haupt- und Hilfsbetriebegenerator 13 mit dem Verbrennungsaggregat zu erhalten.

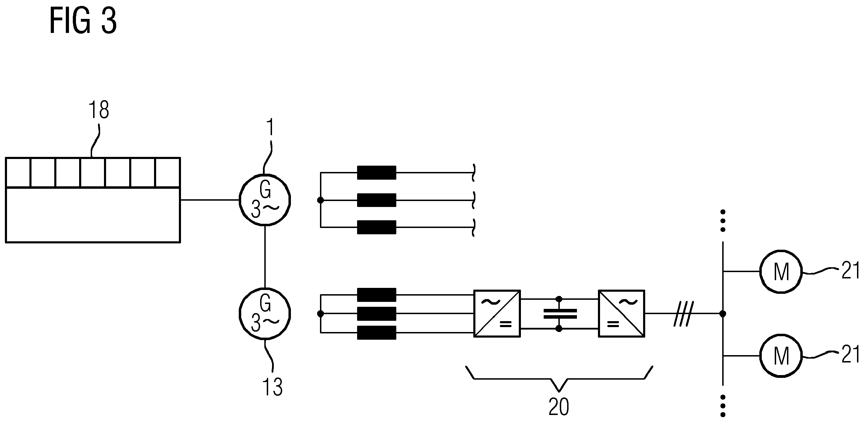

Demnach liegt gemäß FIG 3 nunmehr eine eigene Energieerzeugung der Hilfsbetriebe über den Hilfsbetriebegenerator 13 vor, der über eine oder mehrere Stromrichteranordnungen 20 eine vorzugsweise dreiphasige Versorgung von einem oder mehreren Hilfsbetrieben 21, wie Lüfter, Klimaanlagen gewährleistet.

Eine derartige Anordnung eines Hilfsbetriebegenerators 13 zwischen dem Hauptgenerator 1 und einem Verbrennungsaggregat 18, vorzugsweise einem Dieselaggregat ist für große dieselelektrische Fahrzeuge, wie beispielsweise für Lokomotiven oder für Mining Trucks beim Erzabbau im Tagebau aufgrund der Kompaktheit besonders geeignet.

## Patentansprüche

1. Fahrzeug mit dieselelektrischer Energieerzeugung mittels eines Dieselaggregats (18) für zumindest einen elektrischen Fahrmotor und zumindest einen Hilfsbetrieb (21), **dadurch gekennzeichnet, dass** die dieselelektrische Energieerzeugung des Fahrmotors über einen Hauptgenerator (1) erfolgt und die elektrische Energieerzeugung des Hilfsbetriebs (21) über einen Hilfsbetriebegenerator (13) erfolgt, wobei Hauptgenerator (1) und Hilfsbetriebegenerator (13) galvanisch voneinander getrennt und mechanisch gekoppelt sind und wobei der Hilfsbetriebegenerator (13) zwischen dem Dieselaggregat (18) und dem Hauptgenerator (1) angeordnet ist.

2. Fahrzeug nach Anspruch 1, **dadurch gekennzeichnet, dass** die mechanische Kupplung über ein Getriebe oder direkt über die gleiche Welle (9) des Hauptgenerators (1) erfolgt, wobei der Hilfsbetriebegenerator (13) zwischen Hauptgenerator (1) und Dieselaggregat (18) angeordnet ist.

3. Fahrzeug nach Anspruch 1 oder 2, **dadurch gekennzeichnet, dass** der Hilfsbetriebegenerator (13) als Innenläufer ausgeführt ist, dessen Stator (22) den mit Permanentmagneten (15) versetzten Wellenabschnitt umgibt.

4. Fahrzeug nach einem der vorhergehenden Ansprüche, **dadurch gekennzeichnet, dass** der Stator (22) des Hilfsbetriebegenerators (13) Zahnspulen aufweist.

5. Fahrzeug nach einem der vorhergehenden Ansprüche,. **dadurch gekennzeichnet, dass** die Permanentmagnete (15) außen an der Welle (9) oder vergraben in einem zusätzlichen magnetflussleitenden Element, insbesondere einer Manschette (14) angeordnet sind.

6. Fahrzeug nach einem der vorhergehenden Ansprüche, **dadurch gekennzeichnet, dass** der Stator (26) des Hilfsbetriebegenerators (13) durch eine Halterung (16) im Lagerschild oder Gehäuse (4) oder Luftauslassring des Hauptgenerators (1) gehalten ist.

7. Fahrzeug nach einem der vorhergehenden Ansprüche, **dadurch gekennzeichnet, dass** ein Kühlluftstrom durch axiale Kühlkanäle (7) des Stators (2) des Hauptgenerators (1) und/oder durch axiale Kühlkanäle (8) des Rotors (24) führbar ist und somit zumindest ein Teil des Kühlluftstromes auf den Hilfsbetriebegenerator (13) lenkbar ist.

8. Fahrzeug nach einem der vorhergehenden Ansprüche, **dadurch gekennzeichnet, dass** der Hilfsbetriebegenerator (13) im Wesentlichen radial innerhalb des Wickelkopfes (3) und/oder einer Polspulenwicklung des Rotors des Hauptgenerators (1) angeordnet ist.
